# EUROPEAN PATENT SPECIFICATION

(11) **EP 3 909 804 B1**
(45) Date of publication and mention of the grant of the patent: **11.11.2026**
(21) Application number: 20174497.6
(22) Date of filing: 13.05.2020
(51) Int. Cl.: B60L 53/14

(54) **A METHOD FOR ACHIEVING A DESIRED OPERATIONAL STATE IN A VEHICLE**
VERFAHREN ZUR ERREICHUNG EINES GEWÜNSCHTEN BETRIEBSZUSTANDS IN EINEM FAHRZEUG
PROCÉDÉ PERMETTANT D'OBTENIR UN ÉTAT DE FONCTIONNEMENT SOUHAITÉ DANS UN VÉHICULE

(43) Date of publication of application: 17.11.2021
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: HAGSTRÖM, Albin, 415 45 GÖTEBORG (SE); JOHANSSON, Jonathan, 417 14 GÖTEBORG (SE)
(74) Representative: Zacco Sweden AB

(56) References cited:
- US-A1- 2015 222 708
- US-A1- 2018 201 151
- US-A1- 2020 055 406

## Description

### TECHNICAL FIELD

The present disclosure relates to a method for achieving a desired operational state in a vehicle. The method involves measuring a first time duration between a first activity of a first vehicle and a second activity of the first vehicle, or measuring an average first time duration of a plurality of first vehicles between a first activity and a second activity of each first vehicle.

### BACKGROUND

Today's highly developed vehicles are many times having components or systems that need to be activated, or functions that need to be executed, either by the vehicle itself or by a user of the vehicle in order to achieve a desired operational state in the vehicle. The vehicle related components or systems could be activated or be triggered when there is a specific need. One example is mobile device applications that are connecting the vehicle and certain functions of the vehicle to one or more users. A desired operational state like driving away with the vehicle can be achieved after for example unlocking of the vehicle and sometimes heating of the vehicle cabin and these functions are commonly integrated in such mobile device applications. Users of the vehicle can simply activate these functions through the mobile device application to achieve the desired operational state. Alternatively, the user can activate functions like unlocking the vehicle with a key fob and cabin heating through an interface in the vehicle before driving away.

It is sometimes difficult for a user to realize when there is a need for activating a vehicle component or system and what vehicle functions that need to be activated before achieving the desired operational state, which may lead to long start-up times of the vehicle before the user can drive away with the vehicle.

One example is the problem with freezing vehicle charging connectors in cold climate conditions, making it difficult for a vehicle user to remove the charging cable from the vehicle. In such climate conditions, the user needs to heat the connector before it could be removed from the vehicle, or initiate a forced removal of the connector. Other solutions are suggesting heated connector parts, but if heaters in the heated connector parts always are activated for example below a certain temperature value, or frequently activated by the user based on weather observations, energy is wasted and vehicle batteries may be drained preventing the achievement of the desired operational state. A forced removal of the charging connector may lead to damaged parts that are costly to replace. Another solution would be to disconnect the non-stuck end of the charging cable from a charging station, and to put the removed cable end inside the side window of the vehicle before driving away with the vehicle. Upcoming legal requirements are however preventing the driving of electric vehicles with a charging cable connected. Another example is the heating of vehicle windows or a vehicle battery before driving away with the vehicle, and the preconditioning of the vehicle before driving away where different vehicle components and systems are activated and controlled in a preconditioning mode.

There is thus a need for an improved vehicle functionality, where the vehicle understands when there is a need for performing certain vehicle related activities for achieving a specific desired operational state.

Document US 2020/0055406 A1 discloses a vehicle rechargeable energy storage system and method of preconditioning the rechargeable energy storage system.

### SUMMARY

An object of the present disclosure is to provide a method for achieving a desired operational state in a vehicle where the previously mentioned problems are avoided. This object is at least partly achieved by the features of the independent claim. The dependent claims contain further developments of the method for achieving the desired operational state in the vehicle.

The disclosure concerns a method for achieving a desired operational state in a vehicle. The method involves measuring a first time duration between a first activity of a first vehicle and a second activity of the first vehicle, or measuring an average first time duration of a plurality of first vehicles between a first activity and a second activity of each first vehicle. Each first vehicle is associated with a geographical area, and the first time duration is indicative of a time duration for achieving a desired operational state of a second vehicle associated with the geographical area. A component or system of the second vehicle associated with the desired operational state is activated before an estimated point in time when the desired operational state of the second vehicle should be achieved if the first time duration is greater than a pre-determined time duration value. The component or system is activated during an activation time duration. The desired operational state of the second vehicle is a ready to drive state, wherein a driving activity of the second vehicle can be initiated. The component or system of the second vehicle is a vehicle heating system and/or a vehicle preconditioning system.

Advantages with these features are that the measurement of the first time duration in the first vehicle or vehicles is used for activating the component or system of the second vehicle if a certain time criterion is met, namely the activation is taking place if the first time duration is greater than the pre-determined time duration value. The component or system of the second vehicle is associated with the desired operational state, and is activated before an estimated point in time when the desired operational state of the second vehicle should be achieved. The second vehicle is thus, based on the input from the first vehicle or vehicles activating the component or system in order to achieve the desired operational state. There is no need for the user of the vehicle to activate the component or system, and the component or system is only activated if the time criterion is met. The vehicles are associated with the same geographical area, and are therefore assumed to have similar external conditions, which may be important for the activation of the component or system. The component or system is activated during an activation time duration in order to achieve the desired operational state. With the features described, the vehicle related component or system is activated or triggered when there is a specific need and the user does not need to realize when there is a need for activating the vehicle component or system and what vehicle functions that need to be activated before achieving the desired operational state. With the system, the vehicle understands based on information from other vehicles when there is a need for performing certain vehicle related activities, and the start-up time before the user can drive away with the vehicle can be significantly reduced. In certain conditions, the vehicle heating system and/or the vehicle preconditioning system may be activated before driving away with the vehicle.

According to an aspect of the disclosure, the pre-determined time duration value is an estimated second time duration associated with the second vehicle between the first activity and the second activity of the second vehicle in operational conditions without activation of the component or system. The estimated second time duration of the second vehicle is suitable to use for the pre-determined time duration value, since it relates to a time duration of the second vehicle between the first activity and the second activity when the component or system is not activated. When not activated, the vehicle could for example be operated under normal conditions where there is no need for the activation. When the component or system is activated, the vehicle is in a state deviating from the normal conditions.

According to another aspect of the disclosure, the activation time duration for the activation of the component or system is determined based on a difference between the measured first time duration and the pre-determined time duration value. A high difference between the measured first time duration and the pre-determined time duration value is indicating that there is a need for a longer activation time duration for the component or the system. A low difference between the measured first time duration and the pre-determined time duration value is indicating that there is a need for a shorter activation time duration for the component or the system. The activation time duration may vary depending on the type of component or system being activated, and the activation time duration is based on the difference with for example a specific factor or function.

According to an aspect of the disclosure, the activation time duration for the activation of the component or system is determined based on an environmental condition of the geographical area. The method further comprises the step: detecting the environmental condition by the first vehicle or first vehicles, by the second vehicle, and/or by an external detection source; or wherein the method comprises the step: estimating the environmental condition by an external estimation source. The detected or estimated environmental condition is a measured or estimated temperature value. An environmental condition that is influencing the achievement of the desired operational state of the vehicle is suitably used for the determination of the activation time duration. With these features, the vehicles located within the geographical area could be used for the detection of the environmental condition. Alternatively, the external detection source or external estimation source is used for detecting or estimating the environmental condition, and these sources are suitably associated with the geographical area of the vehicles. Temperature sensors arranged in the vehicles could be used for the temperature determination. Alternatively, a temperature sensor arranged in the same geographical area can be used for the temperature determination, for example arranged on a building or another object. Estimated temperature values could for example be collected from weather data sources forecasting weather and temperature conditions of the geographical area.

According to an aspect of the disclosure, the estimated point in time for the achieved desired operational state of the second vehicle is selected by a user of the second vehicle; or estimated based upon calendar data associated with a user of the second vehicle; or estimated based upon historic vehicle usage data of the second vehicle. With these features, a flexible arrangement of the system is achieved, where the user can select a suitable point in time for the achievement of the desired operational state. Alternatively, calendar data indicating planned usage of the vehicle or calendar data indicating specific activities are suitable for determining the point in time for the achieved desired operational state. A further alternative is to use collected information about the vehicle usage to determine the point in time. The vehicle may for example be configured to monitor the vehicle usage and use vehicle usage information to estimate the point in time.

According to a further aspect of the disclosure, the first activity is a vehicle unlocking activity, or a vehicle user detection activity. The vehicle unlocking or vehicle user detection activities are suitable for initiating the measurement of the first time duration. Each of these activities is indicating that there is a possible need to initiate the component or system for achieving the desired operational state.

According to an aspect of the disclosure, the second activity is a vehicle engine starting activity; or a vehicle electric motor starting activity; or a vehicle driving away activity; wherein the second activity is an initiation of the activity a first time following an initiation of the first activity. The described activities are suitable for stopping the measurement of the first time duration. Each of these activities is indicating that a desired operational state, such as driving away with the vehicle, is achieved.

According to a further aspect of the disclosure, the vehicle heating system is a heating unit of a charging connector part connected to and/or a charging connector part arranged in the second vehicle; an engine heating unit arranged in the second vehicle; a battery heating unit arranged in the second vehicle; and/or a window heating unit arranged in the second vehicle. The vehicle heating systems described are sometimes necessary to activate in order to achieve the desired operational state, such as driving away with the vehicle, and necessary to activate in order to meet legal requirements or in order to meet operational requirements of the vehicle.

According to an aspect of the disclosure, the method further comprises the steps: if the first time duration is greater than the pre-determined time duration value, activating the component or system of the second vehicle in a low energy mode, wherein the low energy mode is activated during a first low energy activation time duration; and activating the component or system of the second vehicle in a high energy mode during a first high energy activation time duration following the first low energy activation time duration. Alternatively the method comprises the steps: if the first time duration is greater than the pre-determined time duration value, activating the component or system of the second vehicle in a high energy mode, wherein the high energy mode is activated during a second high energy activation time duration; and activating the component or system of the second vehicle in a low energy mode during a second low energy activation time duration following the second high energy activation time duration. The activation of the component or system in the low energy mode and the high energy mode is providing an energy efficient solution with desired results, without the need for using the high energy mode for longer time periods.

According to another aspect of the disclosure, the method further comprises the steps: sending a notification from the second vehicle to a user associated with the second vehicle when the component or system of the second vehicle is activated; and/or sending a notification from the second vehicle to the user associated with the second vehicle when the desired operational state of the second vehicle is achieved; and/or sending a notification from the second vehicle to the user associated with the second vehicle at a pre-determined notification time period before the desired operational state of the second vehicle is achieved. The notifications are making the user aware of the events described in a simple way. The notifications could for example be sent to a mobile device associated with the user.

According to a further aspect of the disclosure, the method further comprises the steps: measuring the first time duration by the first vehicle or vehicles; communicating the first time duration measured by the first vehicle or vehicles from the first vehicle or vehicles to the second vehicle upon detection of the second vehicle by the first vehicle or vehicles, and/or communicating the first time duration measured by the first vehicle or vehicles from the first vehicle or vehicles to the second vehicle upon detection of the first vehicle or vehicles by the second vehicle. The vehicles may be configured with systems that are detecting presence of other vehicles, for example in the same geographical area. Upon detection, the system is communicating the measured first time duration between the first vehicle or vehicles and the second vehicle for an efficient transfer of data.

According to another aspect of the disclosure, the first time duration is communicated to the second vehicle from each first vehicle or vehicles being within a pre-determined distance from the second vehicle. The pre-determined distance is limiting the number of vehicles that are communicating with each other, and may differ depending on the number of communicating vehicles within a specific geographical area.

### BRIEF DESCRIPTION OF DRAWINGS

The disclosure will be described in detail in the following, with reference to the attached drawings, in which
- Fig. 1a-b: show schematically, a view of a first vehicle and a second vehicle in a geographical area according to the disclosure,
- Fig. 2a-b: show schematically, a view of a plurality of first vehicles and the second vehicle in the geographical area according to the disclosure,
- Fig. 3a-b: show schematically, a first time duration of the first vehicle and a second time duration of the second vehicle based on a first activity and a second activity according to the disclosure,
- Fig. 4a-b: show schematically, an activation time duration of the second vehicle in relation to a desired operational state of the second vehicle according to the disclosure,
- Fig. 5a-b: show schematically, low and high energy modes of the activation time duration of the second vehicle according to the disclosure,
- Fig. 6: shows schematically, communication between the second vehicle and a user of the second vehicle according to the disclosure,
- Fig. 7a-b: show schematically, a parking lot and a detached area with a plurality of the first vehicles and the second vehicle, illustrating the geographical area for the first vehicles and the second vehicle according to the disclosure, and
- Fig. 8: shows schematically a flowchart of exemplified method steps for achieving a desired operational state in a vehicle according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

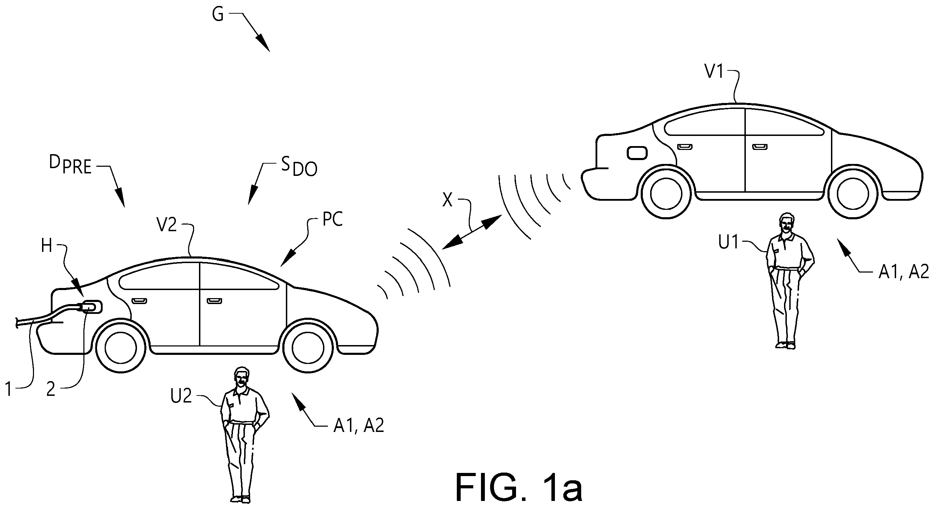

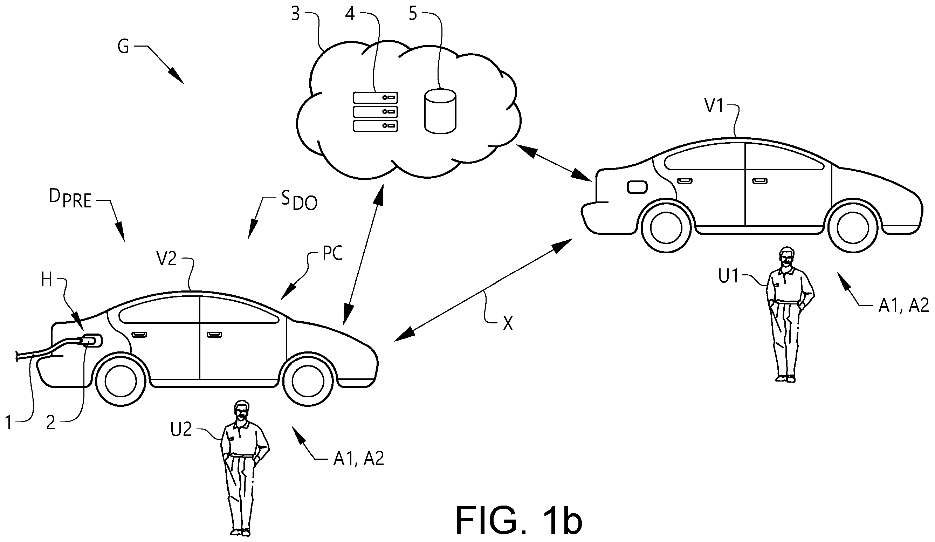

Figures 1a and 1b schematically show a first vehicle V1 and a second vehicle V2 located in a geographical area G. The geographical area G may be any suitable area where the vehicles are located, and the size of the geographical area G may vary, for example depending on the number of vehicles that are located in connection to each other. The first vehicle V1 and the second vehicle V2 are configured for communicating with each other, and at least the second vehicle V2 is configured to receive information from the first vehicle V1, either directly or indirectly via a suitable communication protocol. Communicating vehicles are well known in the art and it is often referred to vehicle-to-vehicle communication (V2V) or car-to-car communication (C2C). Any suitable V2V or C2C communication method may be used in connection to the disclosure, and for achieving desired vehicle communication results, as schematically illustrated in figure 1a. Further, a cloud service 3 may instead be used for the communication between the first vehicle V1 and the second vehicle V2, where the cloud service 3 may comprise cloud-based servers 4 and cloud-based databases 5 for the processing of information and for communication, as schematically illustrated in figure 1b.

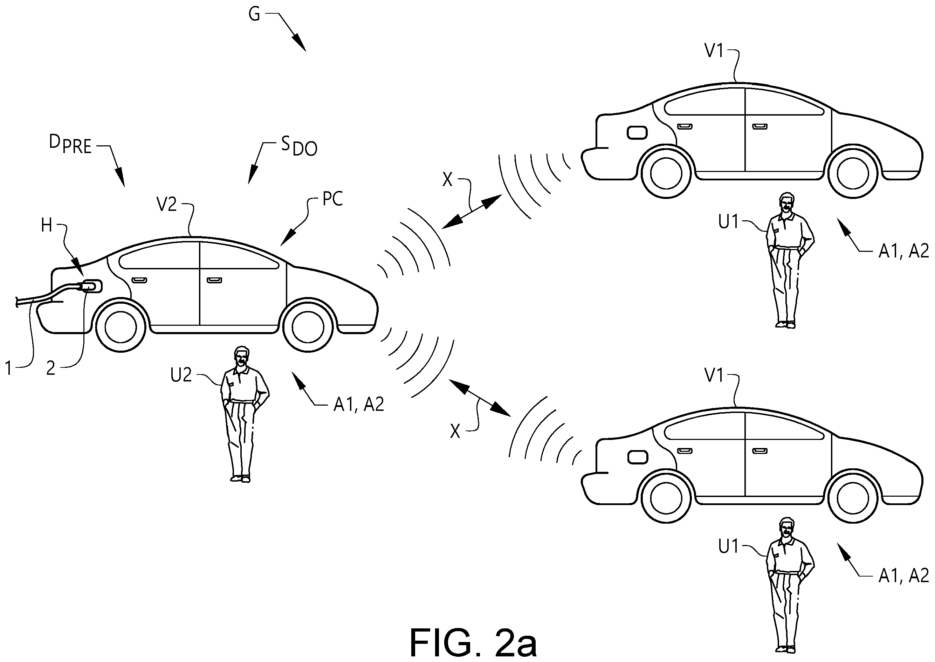

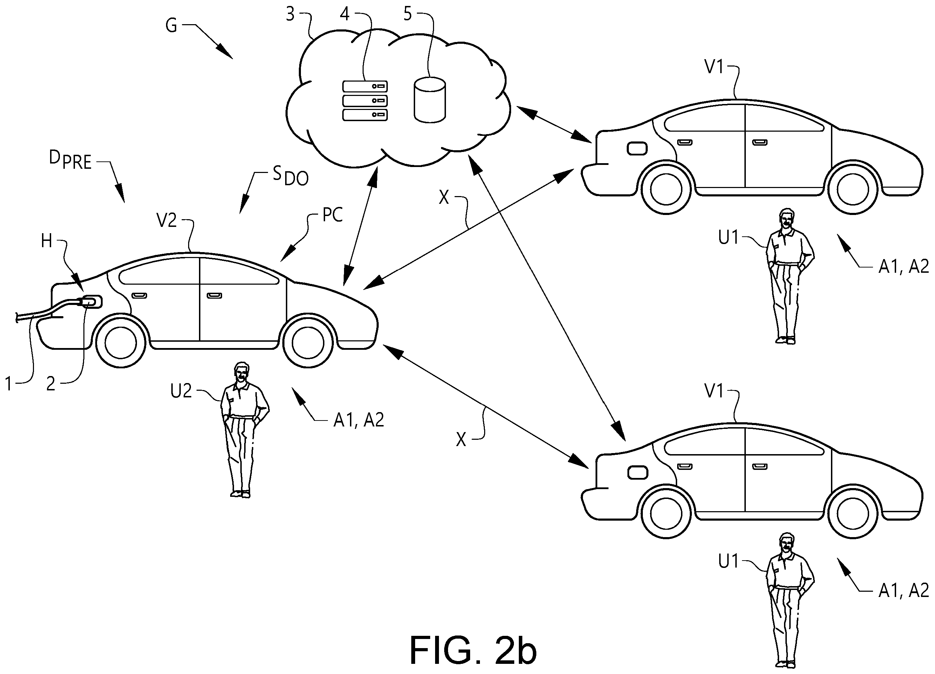

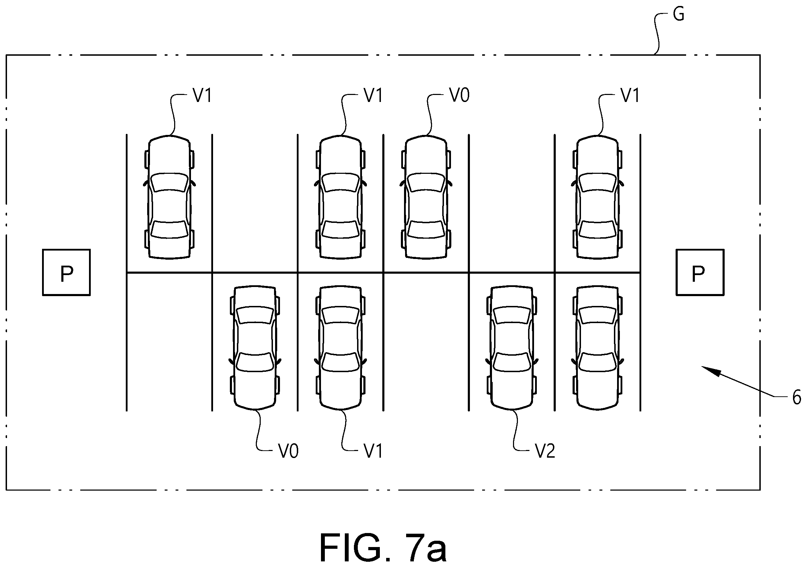

Figures 2a and 2b schematically show a plurality of first vehicles V1 and a second vehicle V2 located in the geographical area G. A plurality of first vehicles V1 is defined as two or more first vehicles V1. In the illustrated embodiment, two first vehicles V1 are schematically shown for illustrative purposes, but any suitable number of first vehicles V1 may be part of the disclosure, as indicated in figures 7a-b. The plurality of first vehicles V1 and the second vehicle V2 are configured for communicating with each other, and at least the second vehicle V2 is configured to receive information from the plurality of first vehicles V1, either directly or indirectly via a suitable communication protocol, such as the V2V communication method or cloud service 3 communication described above, and further illustrated in figures 2a and 2b. V2V communication between the first vehicles V1 and the second vehicle V2 is schematically illustrated in figure 2a, and cloud service based communication in figure 2b. It should be understood that some first vehicles V1 may use V2V communication, and some first vehicles V1 cloud based communication, in combination. The second vehicle V2 is arranged to communicate with each of the plurality of first vehicles V1, and to receive information from each of the first vehicles V1. The first vehicles V1 may be configured to communicate with each other if suitable.

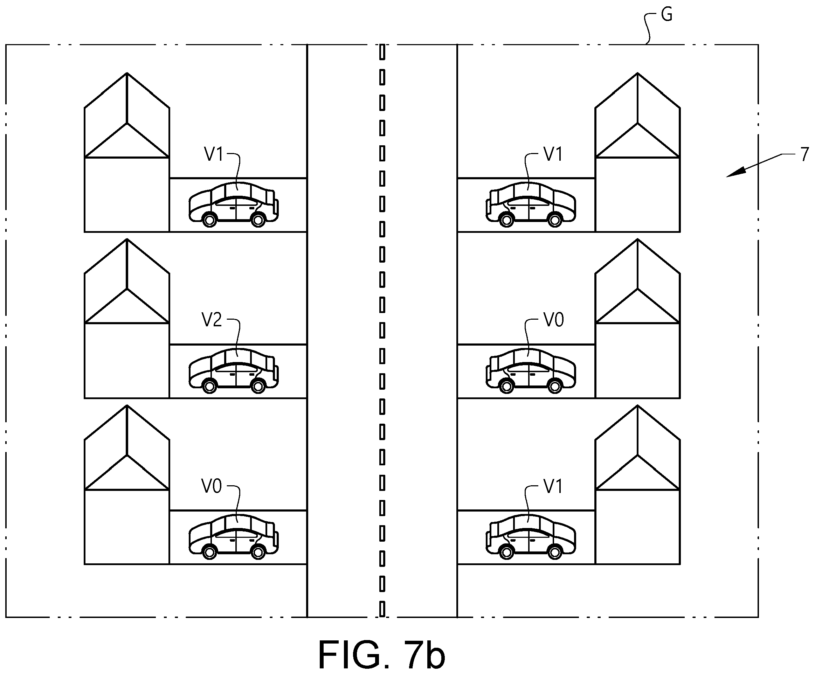

In figure 7a, an example of a geographical area G formed by a parking lot 6 is schematically illustrated, where a plurality of the first vehicles V1 and the second vehicle V2 are parked in the parking lot 6. In figure 7b, another example of a geographical area G formed by a detached area 7 is schematically illustrated. A plurality of the first vehicles V1 and the second vehicle V2 are parked in the detached area 7. It should be understood that other vehicles than the one or more first vehicles V1 and the second vehicle V2 could be positioned in the same geographical area G. In figures 7a and 7b, a plurality of first vehicles V1 and the second vehicle V2 is shown together with other vehicles VO.

The disclosure is referring to a method for achieving a desired operational state S_{DO} in a vehicle, where a vehicle component or system is used for achieving the desired operational state S_{DO}. The desired operational state S_{DO} is a ready to drive state, where a driving activity of the vehicle can be initiated. There are certain procedures, functions, and vehicle related activities, that are necessary to perform before driving away with the vehicle, such as for example, unlocking the vehicle, opening vehicle doors for entering the vehicle, and starting an engine or electric motor of the vehicle. Some procedures are vehicle related and associated with the vehicle. Certain vehicle components or systems are configured to detect and monitor the status of the vehicle, and other components or systems need to be activated before a user of the vehicle can drive away with the vehicle.

The vehicle may for example comprise a control unit that is monitoring the status of the vehicle, vehicle components or systems, and vehicle related activities. The control unit is connected to sensors or other components and systems for detecting the status of the components and systems of the vehicle. As an example, when unlocking or locking the vehicle doors, the control unit may be arranged to detect an activation signal of a key fob or other suitable device. In response to the detected signal, the doors are unlocked or locked depending on the signal received. After an unlocking event, the control unit may for example detect that a front vehicle door is opened and that the user of the vehicle is entering a cabin of the vehicle. Depending on the type of vehicle, certain vehicle systems may be activated when the vehicle is unlocked or when the ignition is activated. Examples of such systems are vehicle safety systems that need to be controlled and activated before the user is driving away with vehicle, and engine systems that need to be activated before the engine is started. Vehicle activities that are initiated or activated before driving away with the vehicle is referred to as a preconditioning of the vehicle. Other types of systems that need to be activated are for example heating systems in cold climate conditions. The control unit may be part of a preconditioning system together with different vehicle components or systems that are initiated, activated, and controlled before the user is allowed to drive away with the vehicle.

To achieve the desired operational state S_{DO} according to the disclosure, a number of steps need to be performed. With reference to figures 1a, 1b, 2a, and 2b, the second vehicle V2 is referred to as the vehicle for which the desired operational state S_{DO} should be achieved. The desired operational state S_{DO} of the second vehicle V2 is a ready to drive state, where a driving activity of the second vehicle V2 can be initiated by a user U2 of the second vehicle V2. The one or more first vehicles V1 are as described above positioned in the same geographical area G as the second vehicle V2, and the second vehicle V2 can communicate with each of the one or more first vehicles V1.

In figures 1a, 1b, 2a, and 2b, the second vehicle V2 is an electric vehicle or a hybrid vehicle, and the second vehicle V2 is connected to a charging station for charging batteries of the second vehicle V2. Any suitable battery charging equipment may be used, and the second vehicle V2 is connected to the charging station via a charging cable 1 and a charging connector 2. The charging connector 2 may be arranged in a conventional way with two connectable parts, where a first charging connector part is attached to the second vehicle V2 and second charging connector part to the charging cable 1. In normal conditions, the user U2 of the second vehicle V2 is removing the charging cable before entering and driving away with the vehicle through separating the charging connector parts from each other.

The one or more first vehicles V1 may be electric vehicles, hybrid vehicles, or traditional vehicles with only internal combustion engines. In normal conditions, a user U1 of a first vehicle V1 needs to perform a number of vehicle related activities before driving away with the first vehicle V1, such as for example unlocking the vehicle, unplugging the charging cable, entering the vehicle, starting the engine or electric motor. In specific conditions, such as in cold climate conditions, the user U1 of the first vehicle V1 may need to perform further vehicle related activities, such as for example remove ice and/or snow from the vehicle, initiate heating of charging connector parts, initiate heating of the vehicle cabin, initiate heating of the battery, and/or initiate heating of vehicle windows. These further vehicle related activities may influence the time needed before the user can drive away with the first vehicle V1. Thus, the time for preparing the first vehicle V1 may be used for indicating a specific condition, such as the exemplified cold climate condition.

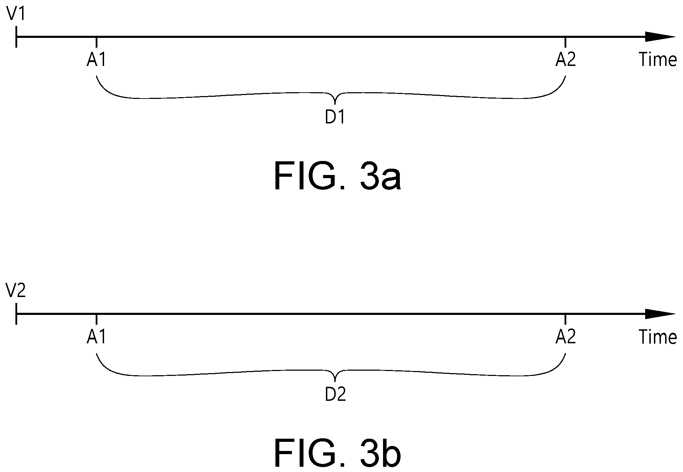

With reference to figures 1a, 1b, and 3a, the second vehicle V2 and the first vehicle V1 are positioned in the geographical area G, and the second vehicle V2 is in connection with the first vehicle V1 via suitable communication means, as described above and schematically illustrated in figures 1a and 1b. In the first vehicle V1 associated with the geographical area G, it is possible to measure a first time duration D1 between a first activity A1 of the first vehicle V1 and a second activity A2 of the first vehicle V1. According to the disclosure, the first time duration D1 between the first activity A1 and the second activity A2 is indicative of a time duration for achieving the desired operational state S_{DO} of the second vehicle V2 associated with the geographical area G. The first vehicle V1 may be arranged with suitable sensors, components, systems, and control units for detecting the first activity A1 and the second activity A2. The first vehicle V1 may also be capable of measuring the first time duration D1 and communicate the first time duration D1, or alternatively communicate the point in time of the first activity A1 and the point in time of the second activity A2. The information may be directly communicated to the second vehicle V2, or indirectly via a remote control system such as the cloud service 3. If the point in time of the first activity A1 and the point in time of the second activity A2 are communicated, the second vehicle V2 may calculate the first time duration D1, or alternatively the remote control system may calculate the first time duration D1 and communicate the first time duration D1 to the second vehicle V2.

In an alternative embodiment illustrated in figures 2a, 2b and 3a, the second vehicle V2 and the plurality of first vehicles V1 are positioned in the geographical area G, and the second vehicle V2 is in connection with each of the first vehicles V1 via suitable communication means, as described above and schematically illustrated in figures 2a and 2b. In each of the first vehicles V1 associated with the geographical area G, it is possible to measure the first time duration D1 between the first activity A1 of the first vehicle V1 and the second activity A2 of the first vehicle V1. In this embodiment, the first time duration D1 is determined as an average first time duration D1 of the plurality of first vehicles V1 between a first activity A1 and a second activity A2 of each first vehicle V1. Thus, for each first vehicle V1 the time duration between the first activity A1 and the second activity A2 is measured, and the average value of the measured time durations for the first vehicles V1 is constituting the first time duration D1. In the embodiment illustrated in figures 2a and 2b, the time durations between the first activity A1 and the second activity A2 are determined for the two first vehicles V1, and the average value of these two time durations constitutes the first time duration D1. It should be understood that the first activity A1 is the same type of activity for all first vehicles V1, and the second activity A2 is the same type of activity for all first vehicles. In the same way as described in the embodiment above in connection to figures 1a and 1b, the first time duration D1 between the first activity A1 and the second activity A2, determined as the measured average first time duration D1 for the plurality of first vehicles V1, is indicative of a time duration for achieving the desired operational state S_{DO} of the second vehicle V2 associated with the geographical area G. Each of the plurality of first vehicles V1 may be arranged with suitable sensors, components, systems, and control units for detecting the first activity A1 and the second activity A2. Each of the plurality of first vehicles V1 may also be capable of measuring the first time duration D1 and communicate the first time duration D1, or alternatively communicate the point in time of the first activity A1 and the point in time of the second activity A2. The information may be directly communicated to the second vehicle V2, or indirectly via a remote control system such as the cloud service 3. If the point in time of the first activity A1 and the point in time of the second activity A2 are communicated, the second vehicle V2 may calculate the first time duration D1 as an average value, or alternatively the remote control system may calculate the first time duration D1 as an average value and communicate the first time duration D1 to the second vehicle V2.

The vehicles may be configured with systems that are detecting presence of other vehicles in the same geographical area G. Upon detection of another vehicle, the system is communicating the measured or determined first time duration D1 between the first vehicle or vehicles and the second vehicle for an efficient transfer of data. The measured or determined first time duration D1 of the one or more first vehicles V1 is communicated from the one or more first vehicles V1 to the second vehicle V2 upon detection of the second vehicle V2, by at least one of the one or more vehicles V1. Alternatively, the measured or determined first time duration D1 of the one or more first vehicles V1 is communicated from the one or more first vehicles V1 to the second vehicle V2 upon detection of at least one of the one or more first vehicles V1 by the second vehicle V2.

In the different embodiments, the system may be operated to communicate the first time duration D1 from the first vehicle or vehicles V1 to the second vehicle V2 only from each first vehicle V1 being within a pre-determined distance X from the second vehicle V2, as schematically illustrated in figures 1a, 1b, 2a, and 2b. The pre-determined distance X is used for limiting the number of vehicles that are communicating with each other, and may differ depending on the number of communicating vehicles within the geographical area G. In this way, only the one or more first vehicles V1 closest to the second vehicle V2 are communicating the first time duration.

If the first time duration D1 according to the different embodiments is greater than a pre-determined time duration value D_{PRE}, a component or system of the second vehicle V2 associated with the desired operational state S_{DO} of the second vehicle V2 is activated. The activation of the component or system of the second vehicle V2 associated with the desired operational state S_{DO}, is activated before an estimated point in time when the desired operational state S_{DO} of the second vehicle V2 should be achieved. The component or system is activated during an activation time duration DA.

The determined first time duration D1 from the first vehicle or vehicles V1 in the different embodiments is thus used for activating the component or system of the second vehicle V2 if a certain time criterion is met, namely if the first time duration D1 is greater than the pre-determined time duration D_{PRE}. The component or system of the second vehicle V2 is associated with the desired operational state S_{DO}, and is activated before an estimated point in time when the desired operational state S_{DO} of the second vehicle should be achieved. The second vehicle is thus, based on the input from the first vehicle or vehicles activating the component or system in order to achieve the desired operational state S_{DO}. The vehicles are associated with the same geographical area G, and are therefore assumed to have similar external conditions, which may be important for the activation of the component or system, as will be further described below. The component or system is activated during an activation time duration DA in order to achieve the desired operational state S_{DO}.

The pre-determined time duration value D_{PRE} is used as a trigger value for activating the component or system. The pre-determined time duration value D_{PRE} may for example be a fixed pre-determined value dependent on the type of component or system, where the pre-determined time duration value D_{PRE} is an estimated value that is typical for the time duration between the first activity A1 and the second activity A2 in normal conditions. A suitable pre-determined time duration value D_{PRE} may for example be determined through testing operations or simulations, and may differ between different vehicle types. Alternatively, the pre-determined time duration value D_{PRE} is an estimated second time duration D2 associated with the second vehicle V2 between the first activity A1 and the second activity A2 of the second vehicle V2 in normal operational conditions without activation of the component or system, as schematically shown in figure 3b. The first activity A1 of the second vehicle V2 is the same as the first activity A1 of the one or more first vehicles V1, and the second activity A2 of the second vehicle V2 is the same as the second activity A2 of the one or more first vehicles V1. The estimated second time duration D2 of the second vehicle V2 is suitable to use for the pre-determined time duration D_{PRE}, since it relates to a time duration of the second vehicle between the first activity and the second activity when the component or system is not activated. When not activated, the vehicle could for example be in a standard state and operated in normal conditions where there is no need for activation of the component or system. When the component or system is activated, the vehicle is in a state deviating from the standard state and operated in specific conditions, such as the cold climate condition, where there is a need for activating the component or system.

According to the disclosure, the first activity A1 is a vehicle unlocking activity, or a vehicle user detection activity. A vehicle unlocking activity is referring to the unlocking of the vehicle from a locked state. The unlocking of the vehicle may be initiated by a user of the vehicle in any suitable way. The unlocking can for example be initiated via a key fob or other remote control device associated with the vehicle, a mobile device such as a smartphone associated with the vehicle, a sensor attached to the vehicle, or by a traditional key for unlocking the vehicle. A vehicle user detection activity is referring to an event, where an associated user of the vehicle is detected within a certain distance from the vehicle and where the vehicle can detect the user. The vehicle user detection activity may be performed with any suitable conventional detection means. The detection of the user may be accomplished with a remote vehicle key, a smartphone, or other device detectable by the vehicle within a certain range or distance from the vehicle. The detection of the user may also be accomplished with suitable sensors, such as face detection sensors or other suitable sensors. The vehicle unlocking or vehicle user detection activities are suitable for starting the measurement of the first time duration D1. Each of these activities may indicate that there is a possible need to activate the component or system for achieving the desired operational state S_{DO}. It should be understood that the first activity A1 could be an activity associated with the vehicle different from the ones exemplified above.

According to the disclosure, the second activity A2 is a vehicle engine starting activity, a vehicle electric motor starting activity, or a vehicle driving away activity. A vehicle engine starting activity is referring to an activity where the user of the vehicle is initiating a starting sequence of an internal combustion engine. The user of the vehicle may for example use a key for starting the engine or push a start button. A vehicle electric motor starting activity is referring to an activity where a user of the vehicle is initiating a starting sequence of an electric motor in a hybrid or electric vehicle by for example pushing a start button or activating a start system switch. A vehicle driving away activity is referring to an activity where the user of the vehicle is driving away with the vehicle. The vehicle driving away activity may for example be determined when the wheels of the vehicle start to rotate, or when a positioning device such as for example a GPS unit, is detecting a movement of the vehicle from a standstill position. Other suitable sensors, such as acceleration sensors may also be used to detect a movement of the vehicle from a standstill position. The second activity A2 is an initiation of the activity a first time following an initiation of the first activity A1, and as an example the starting of an engine the first time after unlocking the vehicle may constitute the second activity A2 where the unlocking of the vehicle is the first activity A1. The described second activities A2 are suitable for stopping the measurement of the first time duration D1. Each of these activities may indicate that the desired operational state S_{DO}, such as driving away with the vehicle, is achieved. It should be understood that the second activity A2 could be an activity associated with the vehicle different from the ones exemplified above.

The component or system of the second vehicle V2 is a vehicle heating system H and/or a vehicle preconditioning system PC. The vehicle heating system H, may be a heating unit of a charging connector part connected to and/or a charging connector part arranged in the second vehicle V2; an engine heating unit arranged in the second vehicle V2; a battery heating unit arranged in the second vehicle V2; and/or a window heating unit arranged in the second vehicle V2. The heating systems described are sometimes necessary to activate in order to achieve the desired operational state S_{DO}, such as driving away with the vehicle, and may be activated in specific conditions, such as cold climate conditions.

The activation time duration DA for the activation of the component or system in the second vehicle V2 may be determined based on a difference between the measured first time duration D1 and the pre-determined time duration value D_{PRE}. A high difference between the first time duration D1 and the pre-determined time duration D_{PRE} may be used as an indication for the need of a longer activation time duration DA of the component or the system. A low difference between the first time duration D1 and the pre-determined time duration D_{PRE} value may be used as an indication for the need of a shorter activation time duration DA of the component or the system. The activation time duration may per se vary depending on the type of component or system being activated, and the activation time duration is based on the difference with for example a specific factor or function. A vehicle heating system H may for example be activated in specific conditions during a longer activation time duration DA when the ambient temperature is very low, compared to higher ambient temperatures.

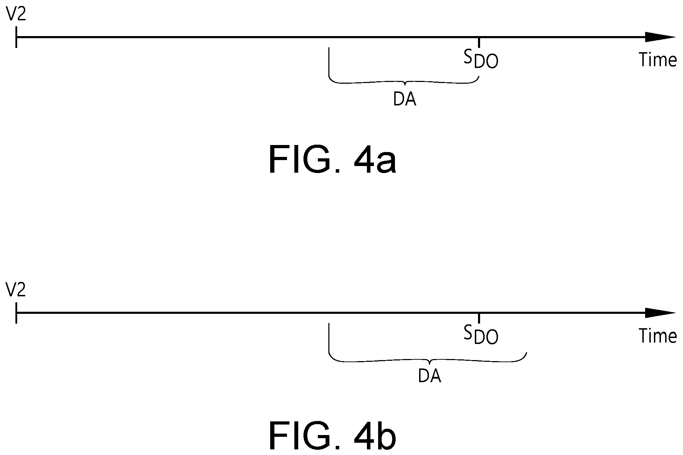

According to the disclosure, it may be determined that the desired operational state S_{DO} of the second vehicle V2 is achieved when the activation time duration DA of the component or system is completed, as schematically illustrated in figure 4a, or before the activation time duration DA of the component or system is completed. If the component or system for example is the heating unit of the charging connector part connected to and/or the charging connector part arranged in the second vehicle V2, the heating of the parts should be terminated when the connector parts are separated from each other at a point in time before the user U2 of the second vehicle V2 is driving away with the second vehicle V2. Alternatively, it may be determined that the desired operational state S_{DO} of the second vehicle V2 is achieved before the activation time duration DA of the component or system is completed, as schematically illustrated in figure 4b. If the component or system is a vehicle heating system H, such as the engine heating unit arranged in the second vehicle V2; the battery heating unit arranged in the second vehicle V2; and/or the window heating unit arranged in the second vehicle V2, it may be desired to operate the heating system H even when driving away with the vehicle.

The activation time duration DA for the activation of the component or system may alternatively, or in addition, be determined based on an environmental condition of the geographical area G. The environmental condition could be detected by the first vehicle V1 or first vehicles V1, by the second vehicle V2, and/or by an external detection source. The environmental condition could further be estimated by an external estimation source. According to the disclosure, the detected or estimated environmental condition may be a measured or estimated temperature value. Temperature sensors arranged in the one or more first vehicles V1 or in the second vehicle V2 could be used for the temperature determination. Alternatively, a temperature sensor arranged in the same geographical area G as the one or more first vehicles V1 and the second vehicle V2 can be used for the temperature determination, for example arranged on a suitable building or object. Estimated temperature values could for example be collected from weather data sources forecasting weather and temperature conditions of the geographical area G. To avoid that vehicles parked indoors, for example in a garage, are used for the temperature determination, the system may discard measured temperature values that are differing to a high degree compared to other measured temperature values.

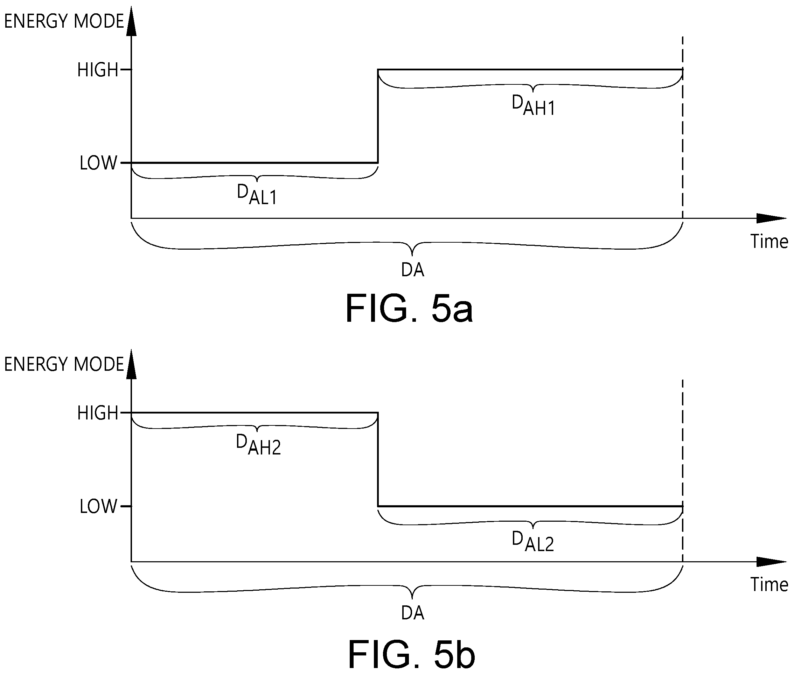

The component or system is activated during the activation time duration DA in order to achieve the desired operational state S_{DO}. The degree of activation of the component or system may vary during the activation time duration DA, and the degree of activation may increase, decrease or vary in different ways during the activation time duration DA. If the component or system is the vehicle heating system described above, the vehicle heating system may be activated in different energy modes throughout the activation time duration DA, as exemplified in figures 5a and 5b. In the embodiment illustrated in figure 5a, the component or system of the second vehicle V2 is activated if the first time duration D1 is greater than the pre-determined time duration value D_{PRE}. The component or system of the second vehicle V2 is first activated in a low energy mode, where the low energy mode is activated during a first low energy activation time duration D_{AL1}. Thereafter the component or system is activated in a high energy mode during a first high energy activation time duration D_{AH1} following the first low energy activation time duration D_{AL1}. In the embodiment illustrated in figure 5b, the component or system of the second vehicle V2 is activated if the first time duration D1 is greater than the pre-determined time duration value D_{PRE}. The component or system of the second vehicle V2 is first activated in a high energy mode, where the high energy mode is activated during a second high energy activation time duration D_{AH2}. Thereafter the component or system is activated in a low energy mode during a second low energy activation time duration D_{AL2} following the second high energy activation time duration D_{AH2}. The activation of the component or system in the low energy mode and the high energy mode is providing an energy efficient solution, without the need for using a high energy mode for longer time periods.

The estimated point in time for the achieved desired operational state S_{DO} of the second vehicle V2 may be determined in different suitable ways. The estimated point in time for the achieved desired operational state S_{DO} of the second vehicle V2 may be selected by a user U2 of the second vehicle V2; or estimated based upon calendar data associated with a user U2 of the second vehicle V2; or estimated based upon historic vehicle usage data of the second vehicle V2. The user can in one alternative embodiment, select a suitable point in time for the achievement of the desired operational state S_{DO}. The point in time selected by the user is for example an estimated future point in time when the user U2 of the second vehicle V2 is expected to drive away with the second vehicle V2. The user U2 may for example communicate the point in time to the second vehicle V2 through a mobile device associated with the vehicle or through a suitable interface in the second vehicle V2. The second vehicle is collecting information about the first time duration D1 from one or more second vehicles V1 when such data is available from the one or more first vehicles V1, as described above, to determine if the first time duration D1 is greater than the pre-determined time duration value D_{PRE}. If the first time duration D1 is greater than the pre-determined time duration value D_{PRE}, the second vehicle is securing that the component or system is activated at a suitable point in time before the desired operational state S_{DO} should be achieved, which suitable point in time for activation of the component or system is depending on the activation time duration DA needed for the system or component before achieving the desired operational state S_{DO}. Alternatively, calendar data indicating planned usage of the second vehicle V2 or calendar data indicating specific activities are suitable for determining the point in time for the achieved desired operational state S_{DO}. The vehicle may have access to calendar data of the user U2 of the second vehicle V2, and based on the calendar data, the second vehicle V2 is determining the point in time for the desired operational state S_{DO}. A further alternative is to use collected information about the vehicle usage to estimate the point in time. The second vehicle V2 may be configured to detect when the user U2 of the vehicle usually is driving away with the second vehicle V2, and based on recurring data estimate the point in time for the achieved desired operational state S_{DO}. Suitable software algorithms may be used for the time estimations and determinations, and calculations needed may be performed by the control unit.

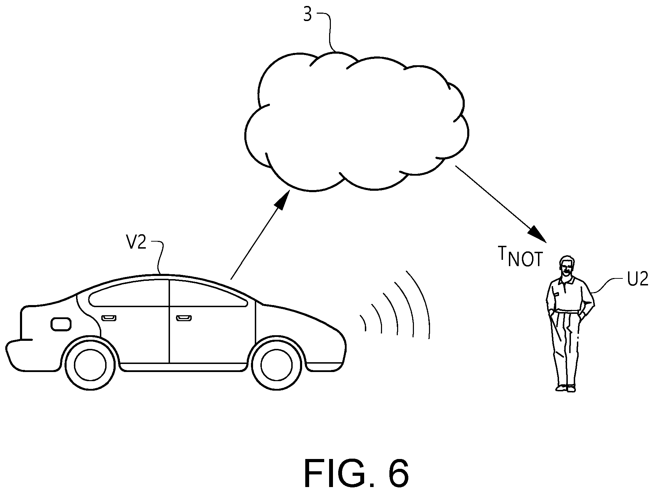

A notification may be sent from the second vehicle V2 to a user U2 associated with the second vehicle V2 when the component or system of the second vehicle V2 is activated. Alternatively or in addition, a notification is sent from the second vehicle V2 to the user U2 associated with the second vehicle V2 when the desired operational state S_{DO} of the second vehicle V2 is achieved, and/or notification is sent from the second vehicle V2 to the user U2 associated with the second vehicle V2 at a pre-determined notification time period T_{NOT} before the desired operational state S_{DO} of the second vehicle V2 is achieved, as schematically illustrated in figure 6. The notifications are making the user aware of the events described. The notifications could for example be sent to the user U2 of the second vehicle V2 via the cloud service 3 or directly from the second vehicle V2, and received in a mobile device, such as a smartphone, associated with the user U2 of the second vehicle V2.

The disclosure further concerns a non-transitory computer-readable medium comprising instructions which, when executed by a computer, cause the computer to carry out the method in the embodiments described above. The disclosure further concerns a cloud computing system configured to carry out the method in the embodiments described above.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of the vehicle component or system, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or the cloud-based server.

The processors associated with the vehicle system may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

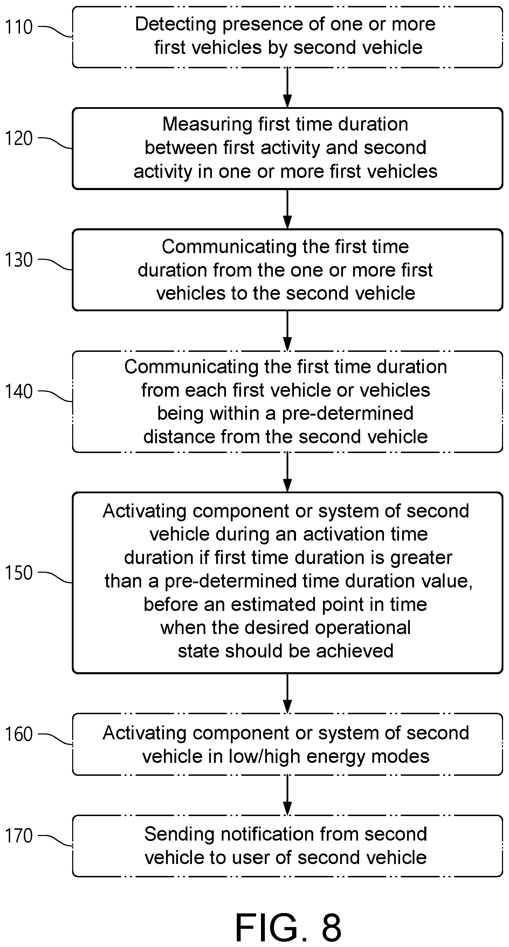

A flowchart of exemplified method steps for achieving the desired operational state in a vehicle is shown in figure 8, where the exemplified method comprises the following steps:
In step 120, a first time duration D1 between the first activity A1 of the first vehicle V1 and the second activity A2 of the first vehicle V1 is measured, or an average first time duration D1 of the plurality of first vehicles V1 between the first activity A1 and the second activity A2 of each first vehicle V1 is measured.
In step 130, the first time duration D1 measured by the one or more first vehicles V1 is communicated from the one or more first vehicles V1 to the second vehicle V2.
In step 150, a component or system of the second vehicle V2 associated with the desired operational state S_{DO} of the second vehicle V2 is activated during an activation time duration DA if the first time duration D1 is greater than a pre-determined time duration value D_{PRE}, and activation of the component or system of the second vehicle V2 before an estimated point in time when the desired operational state S_{DO} of the second vehicle V2 should be achieved.

In some embodiments, the method for achieving a desired operational state in a vehicle further comprises the following steps:
In step 110, the second vehicle V2 is detecting the presence of the one or more first vehicles V1, and/or the one or more first vehicles V1 are detecting the presence of the second vehicle V2.
In step 140, the first time duration D1 is communicated to the second vehicle V2 from each first vehicle or vehicles V1 being within a pre-determined distance X from the second vehicle V2.
In step 160, the component or system of the second vehicle V2 is activated in the low energy mode during the first low energy activation time duration D_{AL1} and in a high energy mode during the first high energy activation time duration D_{AH1} following the first low energy activation time duration D_{AL1}; or the component or system of the second vehicle V2 is activated in the high energy mode during the second high energy activation time duration D_{AH2} in the low energy mode during the second low energy activation time duration D_{AL2} following the second high energy activation time duration D_{AH2}.
In step 170, a notification is sent from the second vehicle V2 to a user U2 associated with the second vehicle V2 when the component or system of the second vehicle V2 is activated; and/or a notification is sent from the second vehicle V2 to the user U2 associated with the second vehicle V2 when the desired operational state S_{DO} of the second vehicle V2 is achieved; and/or a notification is sent from the second vehicle V2 to the user U2 associated with the second vehicle V2 at a pre-determined notification time period T_{NOT} before the desired operational state S_{DO} of the second vehicle (V2) is achieved.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the appended claims. Reference signs mentioned in the claims should not be seen as limiting the extent of the matter protected by the claims, and their sole function is to make claims easier to understand.

### REFERENCE SIGNS

- A1:: First activity
- A2:: Second activity
- D1:: First time duration
- D2:: Second time duration
- DA:: Activation time duration
- D_{AH1}:: First high energy activation time duration
- D_{AH2}:: Second high energy activation time duration
- D_{AL1}:: First low energy activation time duration
- D_{AL2}:: Second low energy activation time duration
- D_{PRE}:: Pre-determined time duration value
- G:: Geographical area
- H:: Vehicle heating system
- PC:: Vehicle preconditioning system
- S_{DO}:: Desired operational state
- T_{NOT}:: Notification time period
- U1:: User, First vehicle
- U2:: User, Second vehicle
- V1:: First vehicle
- V2:: Second vehicle
- VO:: Other vehicle
- X:: Pre-determined distance
- 1:: Charging cable
- 2:: Charging connector
- 3:: Cloud service
- 4:: Cloud-based server
- 5:: Cloud-based database
- 6:: Parking lot
- 7:: Detached area

## Claims

1. A method for achieving a desired operational state in a vehicle, comprising the steps of:
measuring a first time duration (D1) between a first activity (A1) of a first vehicle (V1) and a second activity (A2) of the first vehicle (V1), or measuring an average first time duration (D1) of a plurality of first vehicles (V1) between a first activity (A1) and a second activity (A2) of each first vehicle (V1),
wherein
each first vehicle is (V1) is associated with a geographical area (G), wherein the first time duration (D1) is indicative of a time duration for achieving a desired operational state (S_{DO}) of a second vehicle (V2) associated with the geographical area (G),
activating a component or system of the second vehicle (V2) associated with the desired operational state (S_{DO}) before an estimated point in time when the desired operational state (S_{DO}) of the second vehicle (V2) should be achieved, if the first time duration (D1) is greater than a pre-determined time duration value (D_{PRE}), wherein the component or system is activated during an activation time duration (DA),
wherein the desired operational state (S_{DO}) of the second vehicle (V2) is a ready to drive state, wherein a driving activity of the second vehicle (V2) can be initiated, and
wherein the component or system of the second vehicle (V2) is a vehicle heating system (H) and/or a vehicle preconditioning system (PC).

2. The method according to claim 1,
**characterized in that** the pre-determined time duration value (D_{PRE}) is an estimated second time duration (D2) associated with the second vehicle (V2) between the first activity (A1) and the second activity (A2) of the second vehicle (V2) in operational conditions without activation of the component or system.

3. The method according to claim 1 or 2,
**characterized in that** the activation time duration (DA) for the activation of the component or system is determined based on a difference between the measured first time duration (D1) and the pre-determined time duration value (D_{PRE}).

4. The method according to any preceding claim,
**characterized in that** the activation time duration (DA) for the activation of the component or system is determined based on an environmental condition of the geographical area (G);
wherein the method further comprises the step: detecting the environmental condition by the first vehicle (V1) or first vehicles (V1), by the second vehicle (V2), and/or by an external detection source; or wherein the method comprises the step: estimating the environmental condition by an external estimation source,
wherein the detected or estimated environmental condition is a measured or estimated temperature value.

5. The method according to any preceding claim,
**characterized in that** the estimated point in time for the achieved desired operational state (S_{DO}) of the second vehicle (V2) is selected by a user (U2) of the second vehicle (V2); or estimated based upon calendar data associated with a user (U2) of the second vehicle (V2); or estimated based upon historic vehicle usage data of the second vehicle (V2).

6. The method according to any preceding claim,
**characterized in that** the first activity (A1) is a vehicle unlocking activity, or a vehicle user detection activity.

7. The method according to any preceding claim,
**characterized in that** the second activity (A2) is a vehicle engine starting activity; or a vehicle electric motor starting activity; or a vehicle driving away activity; wherein the second activity (A2) is an initiation of the activity a first time following an initiation of the first activity (A1).

8. The method according to any preceding claim,
**characterized in that** the vehicle heating system (H) is a heating unit of a charging connector part connected to and/or a charging connector part arranged in the second vehicle (V2); an engine heating unit arranged in the second vehicle (V2); a battery heating unit arranged in the second vehicle (V2); and/or a window heating unit arranged in the second vehicle (V2).

9. The method according to any preceding claim,
**characterized in that** the method further comprises the steps: if the first time duration (D1) is greater than the pre-determined time duration value (D_{PRE}) activating the component or system of the second vehicle (V2) in a low energy mode, wherein the low energy mode is activated during a first low energy activation time duration (D_{AL1}); and activating the component or system of the second vehicle (V2) in a high energy mode during a first high energy activation time duration (D_{AH1}) following the first low energy activation time duration (D_{AL1});
or wherein the method comprises the steps: if the first time duration (D1) is greater than the pre-determined time duration value (D_{PRE}) activating the component or system of the second vehicle (V2) in a high energy mode, wherein the high energy mode is activated during a second high energy activation time duration (D_{AH2}); and activating the component or system of the second vehicle (V2) in a low energy mode during a second low energy activation time duration (D_{AL2}) following the second high energy activation time duration (D_{AH2}).

10. The method according to any preceding claim,
**characterized in that** the method further comprises the steps: sending a notification from the second vehicle (V2) to a user (U2) associated with the second vehicle (V2) when the component or system of the second vehicle (V2) is activated; and/or sending a notification from the second vehicle (V2) to the user (U2) associated with the second vehicle (V2) when the desired operational state (S_{DO}) of the second vehicle (V2) is achieved; and/or sending a notification from the second vehicle (V2) to the user (U2) associated with the second vehicle (V2) at a pre-determined notification time period (T_{NOT}) before the desired operational state (S_{DO}) of the second vehicle (V2) is achieved.

11. The method according to any preceding claim,
**characterized in that** the method further comprises the steps: measuring the first time duration (D1) by the first vehicle or vehicles (V1);
communicating the first time duration (D1) measured by the first vehicle or vehicles (V1) from the first vehicle or vehicles (V1) to the second vehicle (V2) upon detection of the second vehicle (V2) by the first vehicle or vehicles (V1), and/or communicating the first time duration (D1) measured by the first vehicle or vehicles (V1) from the first vehicle or vehicles (V1) to the second vehicle (V2) upon detection of the first vehicle or vehicles (V1) by the second vehicle (V2).

12. The method according to claim 11,
**characterized in that** the first time duration (D1) is communicated to the second vehicle (V2) from each first vehicle or vehicles (V1) being within a pre-determined distance (X) from the second vehicle (V2).

## Patentansprüche

1. Verfahren zum Erreichen eines gewünschten Betriebszustands in einem Fahrzeug, umfassend die Schritte:
Messen einer ersten Zeitdauer (D1) zwischen einer ersten Aktivität (A1) eines ersten Fahrzeugs (V1) und einer zweiten Aktivität (A2) des ersten Fahrzeugs (V1) oder Messen einer durchschnittlichen ersten Zeitdauer (D1) einer Mehrzahl von ersten Fahrzeugen (V1) zwischen einer ersten Aktivität (A1) und einer zweiten Aktivität (A2) jedes ersten Fahrzeugs (V1),
wobei jedes erste Fahrzeug (V1) ist, einem geografischen Gebiet (G) zugeordnet ist, wobei die erste Zeitdauer (D1) eine Zeitdauer anzeigt, die zum Erreichen eines gewünschten Betriebszustands (S_{DO}) eines zweiten Fahrzeugs (V2) erforderlich ist, das dem geografischen Gebiet (G) zugeordnet ist,
Aktivieren einer Komponente oder eines Systems des zweiten Fahrzeugs (V2), die dem gewünschten Betriebszustand (S_{DO}) zugeordnet ist, vor einem geschätzten Zeitpunkt, zu dem der gewünschte Betriebszustand (S_{DO}) des zweiten Fahrzeugs (V2) erreicht sein soll, wenn die erste Zeitdauer (D1) größer als ein vorbestimmter Zeitdauerwert (D_{PRE}) ist, wobei die Komponente oder das System während einer Aktivierungszeitdauer (DA) aktiviert wird,
wobei der gewünschte Betriebszustand (S_{DO}) des zweiten Fahrzeugs (V2) ein fahrbereiter Zustand ist, in dem eine Fahraktivität des zweiten Fahrzeugs (V2) eingeleitet werden kann, und
wobei die Komponente oder das System des zweiten Fahrzeugs (V2) ein Fahrzeugheizungssystem (H) und/oder ein Fahrzeugvorkonditionierungssystem (PC) ist.

2. Verfahren nach Anspruch 1,
**dadurch gekennzeichnet, dass** der vorbestimmte Zeitdauerwert (D_{PRE}) eine geschätzte zweite Zeitdauer (D2) ist, die dem zweiten Fahrzeug (V2) zwischen der ersten Aktivität (A1) und der zweiten Aktivität (A2) des zweiten Fahrzeugs (V2) ohne Aktivierung der Komponente oder des Systems unter Betriebsbedingungen zugeordnet wird.

3. Verfahren nach Anspruch 1 oder 2,
**dadurch gekennzeichnet, dass** die Aktivierungszeitdauer (DA) für die Aktivierung der Komponente oder des Systems basierend auf einer Differenz zwischen der gemessenen ersten Zeitdauer (D1) und dem vorbestimmten Zeitdauerwert (D_{PRE}) bestimmt wird.

4. Verfahren nach einem vorhergehenden Anspruch,
**dadurch gekennzeichnet, dass** die Aktivierungszeitdauer (DA) für die Aktivierung der Komponente oder des Systems basierend auf einer Umgebungsbedingung des geografischen Gebiets (G) bestimmt wird;
wobei das Verfahren ferner den Schritt umfasst: Erkennen der Umgebungsbedingung durch das erste Fahrzeug (V1) oder die ersten Fahrzeuge (V1), durch das zweite Fahrzeug (V2) und/oder durch eine externe Erkennungsquelle; oder wobei das Verfahren den Schritt umfasst: Schätzen der Umgebungsbedingung durch eine externe Schätzquelle,
wobei die erkannte oder geschätzte Umgebungsbedingung ein gemessener oder geschätzter Temperaturwert ist.

5. Verfahren nach einem vorhergehenden Anspruch,
**dadurch gekennzeichnet, dass** der geschätzte Zeitpunkt für das Erreichen des gewünschten Betriebszustands (S_{DO}) des zweiten Fahrzeugs (V2) von einem Benutzer (U2) des zweiten Fahrzeugs (V2) ausgewählt wird; oder basierend auf Kalenderdaten, die einem Benutzer (U2) des zweiten Fahrzeugs (V2) zugeordnet sind, geschätzt wird; oder basierend auf historischen Fahrzeugnutzungsdaten des zweiten Fahrzeugs (V2) geschätzt wird.

6. Verfahren nach einem vorhergehenden Anspruch,
**dadurch gekennzeichnet, dass** die erste Aktivität (A1) eine Fahrzeugentriegelungsaktivität oder eine Fahrzeugbenutzererkennungsaktivität ist.

7. Verfahren nach einem vorhergehenden Anspruch,
**dadurch gekennzeichnet, dass** die zweite Aktivität (A2) eine Fahrzeugmotorstartaktivität; oder eine Fahrzeugelektromotor-Startaktivität; oder eine Fahrzeugabfahrtsaktivität ist; wobei die zweite Aktivität (A2) eine erstmalige Einleitung der Aktivität nach einer Einleitung der ersten Aktivität (A1) ist.

8. Verfahren nach einem vorhergehenden Anspruch,
**dadurch gekennzeichnet, dass** das Fahrzeugheizungssystem (H) eine Heizeinheit eines Ladesteckerteils, das mit dem zweiten Fahrzeug (V2) verbunden ist, und/oder ein Ladesteckerteil, das in diesem angeordnet ist; eine im zweiten Fahrzeug (V2) angeordnete Motorheizeinheit; eine im zweiten Fahrzeug (V2) angeordnete Batterieheizeinheit; und/oder eine im zweiten Fahrzeug (V2) angeordnete Fensterheizeinheit ist.

9. Verfahren nach einem vorhergehenden Anspruch,
**dadurch gekennzeichnet, dass** das Verfahren ferner die Schritte umfasst: wenn die erste Zeitdauer (D1) größer als der vorbestimmte Zeitdauerwert (D_{PRE}) ist, Aktivieren der Komponente oder des Systems des zweiten Fahrzeugs (V2) in einem Niedrigenergiemodus, wobei der Niedrigenergiemodus während einer ersten Niedrigenergie-Aktivierungszeitdauer (D_{AL1}) aktiviert wird; und Aktivieren der Komponente oder des Systems des zweiten Fahrzeugs (V2) in einem Hochenergiemodus während einer ersten Hochenergie-Aktivierungszeitdauer (D_{AH1}) nach der ersten Niedrigenergie-Aktivierungszeitdauer (D_{AL1});
wobei das Verfahren die Schritte umfasst: wenn die erste Zeitdauer (D1) größer als der vorbestimmte Zeitdauerwert (D_{PRE}) ist, Aktivieren der Komponente oder des Systems des zweiten Fahrzeugs (V2) in einem Hochenergiemodus, wobei der Hochenergiemodus während einer zweiten Hochenergie-Aktivierungszeitdauer (D_{AH2}) aktiviert wird; und Aktivieren der Komponente oder des Systems des zweiten Fahrzeugs (V2) in einem Niedrigenergiemodus während einer zweiten Niedrigenergie-Aktivierungszeitdauer (D_{AL2}) nach der zweiten Hochenergie-Aktivierungszeitdauer (D_{AH2}).

10. Verfahren nach einem vorhergehenden Anspruch,
**dadurch gekennzeichnet, dass** das Verfahren ferner die Schritte umfasst: Senden einer Benachrichtigung vom zweiten Fahrzeug (V2) an einen Benutzer (U2), der dem zweiten Fahrzeug (V2) zugeordnet ist, wenn die Komponente oder das System des zweiten Fahrzeugs (V2) aktiviert wird; und/oder Senden einer Benachrichtigung vom zweiten Fahrzeug (V2) an den Benutzer (U2), der dem zweiten Fahrzeug (V2) zugeordnet ist, wenn der gewünschte Betriebszustand (S_{DO}) des zweiten Fahrzeugs (V2) erreicht ist; und/oder Senden einer Benachrichtigung vom zweiten Fahrzeug (V2) an den Benutzer (U2), der dem zweiten Fahrzeug (V2) zugeordnet ist, zu einem vorbestimmten Benachrichtigungszeitraum (T_{NOT}) vor dem Erreichen des gewünschten Betriebszustands (S_{DO}) des zweiten Fahrzeugs (V2).

11. Verfahren nach einem vorhergehenden Anspruch,
**dadurch gekennzeichnet, dass** das Verfahren ferner die Schritte umfasst: Messen der ersten Zeitdauer (D1) durch das erste Fahrzeug oder die ersten Fahrzeuge (V1);
Übermitteln der vom ersten Fahrzeug oder den ersten Fahrzeugen (V1) gemessenen ersten Zeitdauer (D1) vom ersten Fahrzeug oder den ersten Fahrzeugen (V1) an das zweite Fahrzeug (V2) bei Erkennung des zweiten Fahrzeugs (V2) durch das erste Fahrzeug oder die ersten Fahrzeuge (V1), und/oder Übermitteln der vom ersten Fahrzeug oder den ersten Fahrzeugen (V1) gemessenen ersten Zeitdauer (D1) vom ersten Fahrzeug oder den ersten Fahrzeugen (V1) an das zweite Fahrzeug (V2) bei Erkennung des ersten Fahrzeugs oder der ersten Fahrzeuge (V1) durch das zweite Fahrzeug (V2).

12. Verfahren nach Anspruch 11,
**dadurch gekennzeichnet, dass** die erste Zeitdauer (D1) dem zweiten Fahrzeug (V2) von jedem ersten Fahrzeug oder den ersten Fahrzeugen (V1) übermittelt wird, die sich innerhalb eines vorbestimmten Abstands (X) vom zweiten Fahrzeug (V2) befinden.

## Revendications

1. Procédé permettant d'obtenir un état de fonctionnement souhaité dans un véhicule, comprenant :
la mesure d'une première durée (D1) entre une première activité (A1) d'un premier véhicule (V1) et une seconde activité (A2) du premier véhicule (V1), ou la mesure d'une première durée (D1) moyenne d'une pluralité de premiers véhicules (V1) entre une première activité (A1) et une seconde activité (A2) de chaque premier véhicule (V1),
dans lequel chaque premier véhicule est (V1) est associé à une zone géographique (G), dans lequel la première durée (D1) est indicative d'une durée pour obtenir un état de fonctionnement souhaité (S_{DO}) d'un second véhicule (V2) associé à la zone géographique (G),
l'activation d'un composant ou système du second véhicule (V2) associé à l'état de fonctionnement souhaité (S_{DO}) avant un instant estimé où l'état de fonctionnement souhaité (S_{DO}) du second véhicule (V2) devrait être obtenu, si la première durée (D1) est supérieure à une valeur de durée prédéterminée (D_{PRE}), dans lequel le composant ou système est activé pendant une durée d'activation (DA),
dans lequel l'état de fonctionnement souhaité (S_{DO}) du second véhicule (V2) est un état prêt à conduire, dans lequel une activité de conduite du second véhicule (V2) peut être initiée, et
dans lequel le composant ou système du second véhicule (V2) est un système de chauffage de véhicule (H) et/ou un système de préconditionnement de véhicule (PC).

2. Procédé selon la revendication 1,
**caractérisé en ce que** la valeur de durée prédéterminée (D_{PRE}) est une seconde durée (D2) estimée associée au second véhicule (V2) entre la première activité (A1) et la seconde activité (A2) du second véhicule (V2) dans des conditions de fonctionnement sans activation du composant ou système.

3. Procédé selon la revendication 1 ou 2,
**caractérisé en ce que** la durée d'activation (DA) pour l'activation du composant ou système est déterminée sur la base d'une différence entre la première durée (D1) mesurée et la valeur de durée prédéterminée (D_{PRE}).

4. Procédé selon l'une quelconque des revendications précédentes,
**caractérisé en ce que** la durée d'activation (DA) pour l'activation du composant ou système est déterminée sur la base d'une condition environnementale de la zone géographique (G) ;
dans lequel le procédé comprend en outre : la détection de la condition environnementale par le premier véhicule (V1) ou les premiers véhicules (V1), par le second véhicule (V2), et/ou par une source de détection externe ; ou dans lequel le procédé comprend : l'estimation de la condition environnementale par une source d'estimation externe,
dans lequel la condition environnementale détectée ou estimée est une valeur de température mesurée ou estimée.

5. Procédé selon l'une quelconque des revendications précédentes,
**caractérisé en ce que** l'instant estimé pour l'état de fonctionnement souhaité (S_{DO}) obtenu du second véhicule (V2) est sélectionné par un utilisateur (U2) du second véhicule (V2) ; ou estimé sur la base de données de calendrier associées à un utilisateur (U2) du second véhicule (V2) ; ou estimé sur la base de données d'utilisation de véhicule historiques du second véhicule (V2).

6. Procédé selon l'une quelconque des revendications précédentes,
**caractérisé en ce que** la première activité (A1) est une activité de déverrouillage de véhicule, ou une activité de détection d'utilisateur de véhicule.

7. Procédé selon l'une quelconque des revendications précédentes,
**caractérisé en ce que** la seconde activité (A2) est une activité de démarrage de moteur de véhicule ; ou une activité de démarrage de moteur électrique de véhicule ; ou une activité de départ de véhicule ; dans lequel la seconde activité (A2) est une initiation de l'activité une première fois suivant une initiation de la première activité (A1).

8. Procédé selon l'une quelconque des revendications précédentes,
**caractérisé en ce que** le système de chauffage de véhicule (H) est une unité de chauffage d'une partie de connecteur de charge reliée à et/ou une partie de connecteur de charge agencée dans le second véhicule (V2) ; une unité de chauffage de moteur agencée dans le second véhicule (V2) ; une unité de chauffage de batterie agencée dans le second véhicule (V2) ; et/ou une unité de chauffage de vitre agencée dans le second véhicule (V2).

9. Procédé selon l'une quelconque des revendications précédentes,
**caractérisé en ce que** le procédé comprend en outre : si la première durée (D1) est supérieure à la valeur de durée prédéterminée (D_{PRE}) l'activation du composant ou système du second véhicule (V2) dans un mode basse énergie, dans lequel le mode basse énergie est activé pendant une première durée d'activation basse énergie (D_{AL1}) ; et l'activation du composant ou système du second véhicule (V2) dans un mode haute énergie pendant une première durée d'activation haute énergie (D_{AH1}) suivant la première durée d'activation basse énergie (D_{AL1}) ; ou dans lequel le procédé comprend : si la première durée (D1) est supérieure à la valeur de durée prédéterminée (D_{PRE}) l'activation du composant ou système du second véhicule (V2) dans un mode haute énergie, dans lequel le mode haute énergie est activé pendant une seconde durée d'activation haute énergie (D_{AH2}) ; et l'activation du composant ou système du second véhicule (V2) dans un mode basse énergie pendant une seconde durée d'activation basse énergie (D_{AL2}) suivant la seconde durée d'activation haute énergie (D_{AH2}).

10. Procédé selon l'une quelconque des revendications précédentes,
**caractérisé en ce que** le procédé comprend en outre : l'envoi d'une notification depuis le second véhicule (V2) à un utilisateur (U2) associé au second véhicule (V2) lorsque le composant ou système du second véhicule (V2) est activé ; et/ou l'envoi d'une notification depuis le second véhicule (V2) à l'utilisateur (U2) associé au second véhicule (V2) lorsque l'état de fonctionnement souhaité (S_{DO}) du second véhicule (V2) est obtenu ; et/ou l'envoi d'une notification depuis le second véhicule (V2) à l'utilisateur (U2) associé au second véhicule (V2) à une période de temps de notification prédéterminée (T_{NOT}) avant que l'état de fonctionnement souhaité (S_{DO}) du second véhicule (V2) ne soit obtenu.

11. Procédé selon l'une quelconque des revendications précédentes,
**caractérisé en ce que** le procédé comprend en outre : la mesure de la première durée (D1) par le premier véhicule ou les premiers véhicules (V1) ;
la communication de la première durée (D1) mesurée par le premier véhicule ou les premiers véhicules (V1) depuis le premier véhicule ou les premiers véhicules (V1) au second véhicule (V2) lors de la détection du second véhicule (V2) par le premier véhicule ou les premiers véhicules (V1), et/ou la communication de la première durée (D1) mesurée par le premier véhicule ou les premiers véhicules (V1) depuis le premier véhicule ou les premiers véhicules (V1) au second véhicule (V2) lors de la détection du premier véhicule ou des premiers véhicules (V1) par le second véhicule (V2).

12. Procédé selon la revendication 11,
**caractérisé en ce que** la première durée (D1) est communiquée au second véhicule (V2) depuis chaque premier véhicule ou premiers véhicules (V1) étant dans une distance prédéterminée (X) depuis le second véhicule (V2).
